# EUROPEAN PATENT SPECIFICATION

(11) **EP 4 335 541 B1**
(45) Date of publication and mention of the grant of the patent: **27.05.2026**
(21) Application number: 23747325.1
(22) Date of filing: 26.01.2023
(51) Int. Cl.: B01F 27/95, B01F 27/072, B01F 27/1123, B01F 27/13, B01F 27/805

(54) **HIGH-SHEAR MIXING METHOD**
MISCHVERFAHREN MIT HOHER SCHERUNG
PROCÉDÉ DE MÉLANGE À CISAILLEMENT ÉLEVÉ

(30) Priority: 28.01.2022 KR 20220013049
(43) Date of publication of application: 13.03.2024
(73) Proprietor: LG Energy Solution, Ltd., Seoul 07335 (KR); LG Electronics Inc., Yeongdeungpo-gu Seoul 07336 (KR)
(72) Inventor: KIM, Taegon, Daejeon 34122 (KR); KIM, Sung Sik, Pyeongtaek-si Gyeonggi-do 17709 (KR); PARK, Jae Seong, Pyeongtaek-si Gyeonggi-do 17709 (KR); KIM, Jeonggil, Daejeon 34122 (KR); KIM, Myeongsoo, Daejeon 34122 (KR); NAM, Hee Jeong, Pyeongtaek-si Gyeonggi-do 17709 (KR)
(74) Representative: Goddar, Heinz J.
(86) International application number: PCT/KR2023/001161
(87) International publication number: WO 2023/146284

(56) References cited:
- JP-A- 2006 272 139
- KR-A- 20100 044 068
- KR-A- 20200 072 801
- KR-B1- 101 392 168
- KR-B1- 102 315 097

## Description

### [Technical Field]

This application claims the benefit of priority based on Korean Patent Application No. 10-2022-0013049, dated January 28, 2022.

The present disclosure relates to a high shear mixing device, particularly, a high shear mixing device used for preparing a dry electrode for a secondary battery.

### [Background Art]

The stirring device is used to finely mix various paste manufacturing facilities and chemical raw materials, such as inks, pigments, paints, cosmetics, pharmaceuticals and paints, various coatings, abrasives, ceramics or metal powder or various electronic materials (PZT, dielectric, MLCC, ferrite, display materials). As the stirring device, in particular, as equipment for stirring high-viscosity substances, a planetary mixer that stirs high-viscosity substances in a container using a blade and a rotor is widely used.

The planetary mixer as described above is also used to prepare an electrode for a secondary battery. That is, along with the expansion of the use or the development of the secondary battery, improvements in low resistance, high capacity, mechanical properties and productivity of the electrode are continuously required, and thus the need for high shear mixing of the mixture to prepare the electrode is also increasing.

Specifically, recently, a technology for preparing a dry electrode film by mixing an active material, a binder, and an electrically conductive material without a liquid medium such as a solvent or dispersion medium, and then passing the powder mixture through a rolling roll, is being actively developed, and high shear mixing has been applied to this preparation of the electrode.

That is, in the above method, a binder called "fiberizable binder" or "fiber-forming binder" is used. If high shear mixing is applied to the mixture containing the binder, the binder is micro-fiberized to adhere the active material and the electrically conductive material.

However, in this high shear mixing process, the fiberizable polymer becomes chewing gum-like state, and a high load is applied to the high shear mixing device, and thus the high shear mixing device is often damaged. Meanwhile, if the shear force is lowered to prevent damage to the equipment as described above, fiberization of the fiberizable polymer is not performed well. Accordingly, due to these problems, it is very difficult to constitute the high shear mixing device as a mass-production equipment for preparing a dry electrode for a secondary battery.

### [Prior Art Document]

### [Patent Document]

(Patent Document 1) Korean Laid-open Patent Publication No.10-2011-0117902
Document KR 102 315 097 B1 discloses a method in accordance with the preamble of claim 1.

### [Disclosure]

### [Technical Problem]

The present invention has been devised to solve the above problems in the prior art, and it is an object of the present disclosure to describe a high shear mixing device capable of efficiently mixing materials without overload when mixing materials by high shear force.

In particular, it is an object of the present invention to provide a high shear mixing method capable of efficiently micro-fiberizing the polymer without overload during high shear mixing of a mixture for preparing a dry electrode comprising a fiberizable polymer as a binder.

### [Technical Solution]

In order to achieve the above object, the present invention provides a high shear mixing method as specified in claim 1.

Further embodiments are defined in the dependent claims.

In accordance with the present invention, the high shear mixing device is used for high shear mixing of a mixture for preparing a dry electrode containing a fiberizable polymer as a binder, and thus may be used for micro-fiberizing the fiberizable polymer.

### [Advantageous Effects]

The high shear mixing device of the present disclosure provides an effect capable of efficiently mixing materials without overload when mixing materials by high shear force. In addition, since damage to the device is minimized by this effect, it has a feature that it is possible to configure the device in a large capacity.

In particular, the high shear mixing device of the present disclosure provides an effect of efficiently micro-fiberizing the polymer without overload during high shear mixing of a mixture for preparing a dry electrode containing a fiberizable polymer as a binder.

### [Description of Drawings]

FIG. 1 is a perspective view showing one embodiment of a high shear mixing device of the present disclosure.
FIG. 2 is a perspective view showing one embodiment of a screw kneader provided in the high shear mixing device of the present disclosure.
FIG. 3 is a perspective view showing another embodiment of a screw kneader provided in the high shear mixing device of the present disclosure.
FIG. 4 is a perspective view showing another embodiment of a screw kneader provided in the high shear mixing device used in the method of the present invention.
FIG. 5 is a perspective view showing another embodiment of a screw kneader provided in the high shear mixing device of the present disclosure.

### [Best Mode]

Hereinafter, examples of the present invention will be described in detail with reference to the accompanying drawings so that those of ordinary skill in the art can easily carry out the present invention. However, the present invention may be embodied in many different forms and is not limited to the examples described herein. Throughout the specification, like reference numerals are assigned to similar parts.

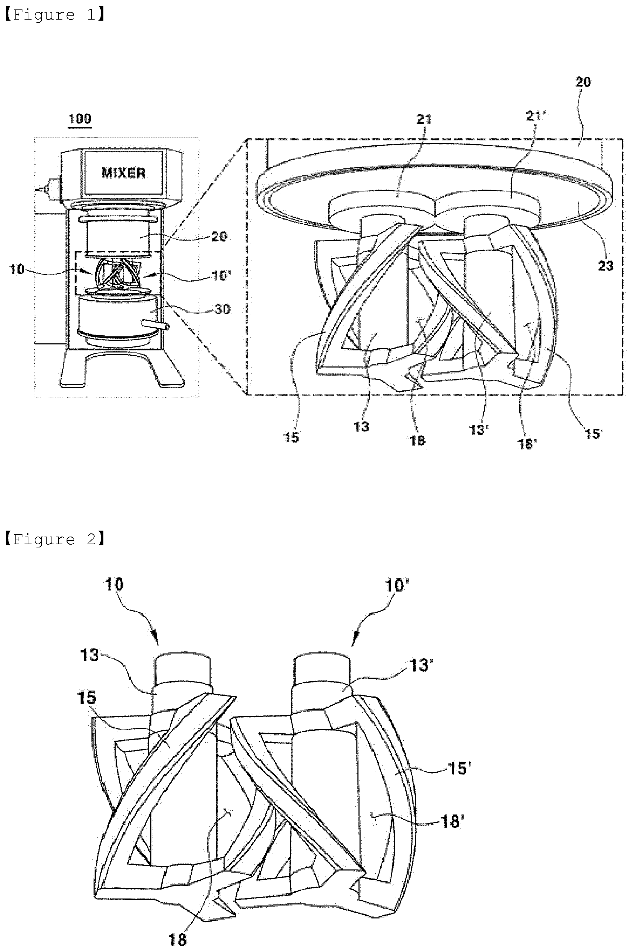

FIG. 1 is a perspective view showing one embodiment of a high shear mixing device 100 of the present disclosure, and FIGs. 2, 3 and 5 are perspective views illustrating another embodiment of a screw kneader provided in the high shear mixing device 100 of the present disclosure.

The high shear mixing device 100 of the present disclosure, as shown in FIG. 1, comprises the first screw kneader 10 and the second screw kneader 10'; the first rotation driving mechanism 21 for rotating the first screw kneader and the second rotation driving mechanism 21' for rotating the second screw kneader; the revolution driving mechanism 23 in which the first rotation driving mechanism 21 and the second rotation driving mechanism 21' are rotatably installed; the driving mechanism body 20 in which the revolution driving mechanism 23 is installed; and the mixing tank 30,
wherein each of the first screw kneader 10 and the second screw kneader 10' comprises shafts 13 and 13' whose one end is connected to the rotation driving mechanisms 21 and 21'; and three or more blades 15 and 15' having one end fixed to the shaft and having a helically curved body along the longitudinal direction of the shaft, and
wherein each of the screw kneaders 10 and 10' rotates in opposite directions with the other screw kneaders and blades 15 and 15' overlapping each other. When the screw kneaders rotate and engage with each other, they are characterized by revolving in the opposite direction to the direction in which the mixtures are discharged.

The high shear mixing device 100 of the present disclosure may be particularly preferably used for preparing a dry electrode for a secondary battery. That is, when preparing a dry electrode for a secondary battery, the high shear mixing device produces a freestanding electrode through a process of high shear mixing the mixture comprising an active material, an electrically conductive material, and a fiberizable binder such as PTFE as a binder to fiberize the binder, and rolling the prepared mixture. During this high shear mixing process, the fiberizable polymer becomes chewing gum-like state and a high load is applied to the high shear mixing device, which often damages the equipment. On the other hand, if the shear force is lowered to prevent damage to the equipment as described above, fiberization of the fiberizable polymer is not performed well. Therefore, due to these problems, it is very difficult to constitute a high shear mixing device as a large-capacity mass-production equipment for preparing a dry electrode for a secondary battery.

However, if the high shear mixing device of the present disclosure is used, while the dispersibility of the mixture is greatly improved and the micro-fiberization of the fiberizable polymer is effectively achieved, there is no heavy load on the device. Therefore, the high shear mixing device of the present disclosure can be preferably used in high shear mixing for preparing a dry electrode for a secondary battery, and makes it possible to constitute a large-capacity mass-production equipment.

If the high shear mixing device of the present disclosure is used, while continuously applying a high-shear force of 10 to 500 N·m to the mixture comprising an active material, an electrically conductive material, and a fiberizable binder such as PTFE as a binder, it is possible to prepare the mixture for a freestanding electrode having good quality without damage to the equipment. In addition, in the case of rolling such mixture, a free-standing electrode having excellent tensile strength is prepared, and when a battery is constituted by such an electrode, the lifetime of the battery is greatly improved.

In one embodiment of the present disclosure, one end of the body of the blades 15 and 15' is coupled to the shaft in a spiral shape in the longitudinal direction, and accordingly, the body surface in the rotational direction may have a shape that is spirally bent along the longitudinal direction of the shaft.

In the present invention, the body of the blades 15 and 15' may have a shape in which the body having a shape of a circular plate with one end cut off, an oval plate with one end cut off or a polygonal plate is spirally bent along the longitudinal direction of the shafts 13 and 13'. In this case, the body may also have a shape in which the exemplified shape is partially modified to be advantageous for high shear mixing. If the body has the polygonal shape, it may be a polygonal shape such as a triangle, a quadrangle, a pentagon, and a hexagon, and is not particularly limited. However, a rectangular shape may be more preferably used.

In accordance the present invention, the high shear mixing device 100 has a feature that the screw kneaders 10 and 10 ' rotate by the rotation driving mechanisms 21 and revolve by the revolution driving mechanism 23. In addition, when the screw kneaders rotate and engage with each other, they are characterized by revolving in the opposite direction to the direction in which the mixtures are discharged. As described above, if the screw kneaders rotate and revolve at the same time, the mixture is more uniformly mixed and high shear mixing can be performed more efficiently, which is preferable.

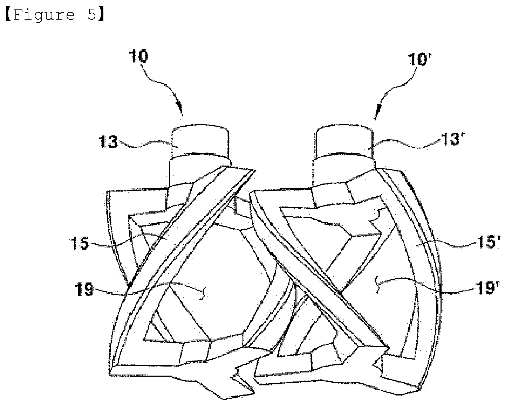

In one embodiment of the present disclosure, all of the blades 15 and 15' provided in the first screw kneader 10 and the second screw kneader 10' may be open-type blades in which through holes 18, 18', 19, and 19' are formed in the center except for the outer periphery of the rotation direction surface, as shown in FIGs. 2 and 5. In this case, the outer peripheral portion adjacent to the shaft among the outer peripheral portion may be removed by extending the through holes 18 and 18'.

The through holes 18 and 18' formed in the blades 15 and 15' of the first screw kneader 10 and the second screw kneader 10' shown in FIG. 2 represent shapes in which the through-holes are independently formed in each blade. That is, the through holes 18 and 18' represent shapes in which a through hole is formed in the center except for the outer periphery of the rotation direction surface of the blade, and in particular, the shape shown in FIG. 2 represents a shape in which the through hole extends to the outer peripheral surface of the shaft.

In one embodiment of the present disclosure, the area of the through holes 18 and 18' may be formed to be 40 to 80%, more preferably 50 to 70% relative to the total area of the rotation direction surface of the blade body. If the through hole is formed within the above range, it is preferable because the mixture is effectively mixed without applying a high load to the device. In particular, within the above range, micro-fiberization of the fiberizable polymer can also be effectively achieved.

The first screw kneader 10 and the second screw kneader 10' shown in FIG. 5 have shapes in which the shaft between the through holes is removed so that the through holes 19 and 19' formed in their blades 15 and 15' are all communicated.

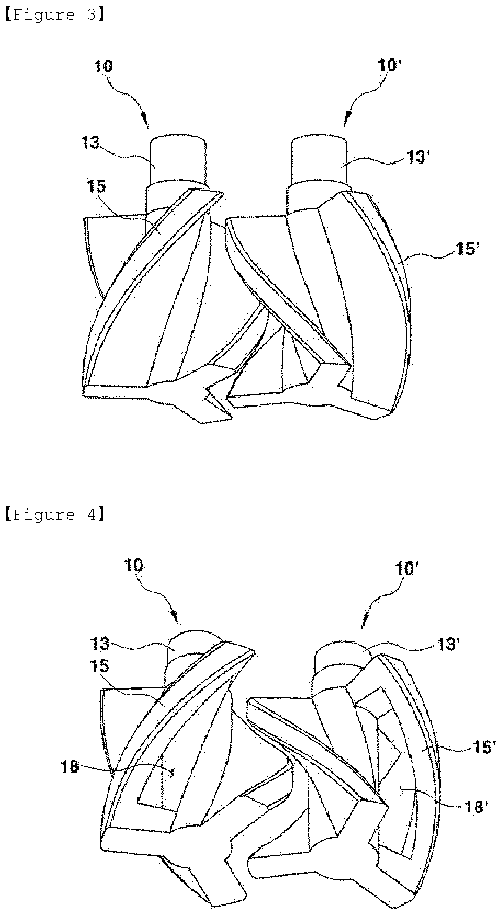

In one embodiment of the present disclosure, all of the blades provided in the first screw kneader 10 and the second screw kneader 10 ' may be closed-type blades in which the rotation direction surface is closed without a through hole, as shown in FIG. 3.

In one embodiment of the present disclosure, all of the blades provided in the first screw kneader 10 may be open-type blades in which through holes 18, 18', 19, and 19' are formed in the center except for the outer periphery of the rotation direction surface, as shown in FIGs. 2 and 5, and
all of the blades provided in the second screw kneader 10' may be closed-type blades in which the rotation direction surface is closed without a through hole, as shown in FIG. 3.

In accordance with the present invention, the first screw kneader 10 and the second screw kneader 10' are provided with three blades, respectively.

In accordance with the present invention, any one blade of the three blades provided in each of the first screw kneader 10 and the second screw kneader 10' are open-type blades in which through holes 18 and 18' are formed in the center except for the outer periphery of the rotation direction surface, and the other two blades are all be closed-type blades in which the rotation direction surface is closed without a through hole, as shown in FIG. 4. If the first screw kneader (10) and the second screw kneader (10') of this shape are comprised, the dispersibility of the mixture is greatly improved, and fiberization of a fiberizable polymer such as PTFE is effectively achieved. In addition, during the fiberization process of the fiberizable polymer such as PTFE, a large load is not applied to the device. Therefore, the high shear mixing device of the present disclosure can be preferably used in high shear mixing for preparing a dry electrode for a secondary battery, and makes it possible to constitute a large-capacity mass-production equipment.

In particular, if a dry freestanding electrode is prepared by high shear mixing the mixture comprising an active material, an electrically conductive material, and a fiberizable binder such as PTFE as a binder and rolling such mixture, the tensile strength of the freestanding electrode is greatly improved, and this dry freestanding electrode provides the effect of greatly improving the lifetime of the secondary battery.

In one embodiment of the present invention, the through holes 18 and 18' of the blades may be formed to extend to the outer peripheral surface of the shaft, as shown in FIG. 4.

In one embodiment of the present invention, the screw kneaders 10 and 10' comprising the open-type blades may have a shape in which a shaft between the through holes is removed so that the through holes 19 and 19' formed in the blades are all communicated.

In accordance with the present invention, the rotation direction distal ends of the blades provided in the first screw kneader and the second screw kneader rotate while maintaining a separation distance of 1 mm to 10 mm, preferably 1 mm to 5 mm, more preferably 1 mm to 3 mm from other screw kneaders. When having the above separation distance, fiberization of a fiberizable polymer such as PTFE is effectively achieved, and the high shear mixing device is not subjected to a large load that may damage the device, and thus it is possible to efficiently prepare a freestanding electrode of good quality.

In accordance with the present invention, the rotational speed of the first screw kneader and the second screw kneader is 10 rpm to 500 rpm, preferably 10 rpm to 300 rpm, more preferably 10 rpm to 150 rpm. If high shear mixing is performed at the above speed, fiberization of a fiberizable polymer such as PTFE is effectively achieved, the high shear mixing device is not subjected to a large load that may damage the device, and thus it is possible to efficiently prepare a freestanding electrode of good quality. In addition, revolution speed is 5 rpm to 100 rpm, preferably 10 rpm to 50 rpm, more preferably 10 rpm to 30 rpm.

Hereinafter, the present invention will be described in detail by way of example in order to specifically explain the present invention. However, the examples according to the present invention may be modified in various other forms, and the scope of the present invention should not be construed as being limited to the examples described in detail below. The examples of the present invention are provided to more completely explain the present invention to those of ordinary skill in the art.

### Example 1: Preparation of freestanding electrodes by high shear mixing device

95.5 % by weight or 97 % by weight of NCM powder, which is particles of positive electrode active material with an average particle diameter of 10 *µ*m (Product name: GL80, LG Chem company), 1.5% by weight of Li250 (Denka company) as an electrically conductive material and PTFE as binder (1.5 % by weight or 3 % by weight) was mixed to prepare a mixture for a freestanding electrode.

The high shear mixing device of the present disclosure was constituted as shown in Table 1 below, and high shear mixing was performed for 2 minutes by applying a shear force of 100 N·m to the mixture at 90 °C at the rotation of 30 rpm and revolution of 15 rpm.

Next, the secondary mixture in the form of dough prepared above was milled at 100 °C with a two roll mill (MR-3, Inoue company) to prepare a free-standing film having a thickness of 200 *µ*m.

Thereafter, the free-standing film was placed on one side of a Primer Coated Aluminum Foil (Manufactured by Dongwon Systems company) current collector having a thickness of 20 *µ*m, and bonded through a lamination roll maintained at 120 °C to prepare a positive electrode.

**Table 1:**

| | Constitution of high shear mixing device | | | | | | Binder content (wt%) |
|---|---|---|---|---|---|---|---|
| | Shape of screw kneader | | | Arrangement of first and second screw blade | Rotation of screw kneader | Mixing volume | |
| Example 1 | first screw kneader | first blade is open-type (through hole formation) and second and third blades are closed-type | shape of FIG. 4 | overlap | revolution + rotation | 1.5L | 1.5 |
| | second screw kneader | first blade is open-type (through hole formation) and second and third blades are closed-type | | | | | |
| Example 2 | first screw | first blade is open-type (through | shape of | overlap | revolution + rotation | 1.5L | 3.0 |
| | kneader | hole formation) and second and third blades are closed-type | FIG. 4 | | | | |
| | second screw kneader | first blade is open-type (through hole formation) and second and third blades are closed-type | | | | | |
| Example 3 | first screw kneader | first, second and third blades are all open-type (through hole formation) | | overlap | revolution + rotation | 1.5L | 3.0 |
| | second screw kneader | first, second and third blades are all closed-type | | | | | |
| Example 4 | first screw kneader | first, second and third blades are all open-type (through hole formation) | shape of FIG. 5 | overlap | revolution + rotation | 1.5L | 3.0 |
| | second screw kneader | first, second and third blades are all open-type (through hole formation) | | | | | |
| Example 5 | first screw kneader | first, second and third blades are all closed-type | shape of FIG. 3 | overlap | revolution + rotation | 1.5L | 3.0 |
| | second screw kneader | first, second and third blades are all closed-type | | | | | |
| Compara tive | first screw | first blade is open-type (through | shape of | overlap | rotation | 0.5L | 1.5 |
| Example 1 | kneader | hole formation) and second and third blades are closed-type | FIG. 4 | | | | |
| | second screw kneader | first blade is open-type (through hole formation) and second and third blades are closed-type | | | | | |
| Compara tive Example 2 | first screw kneader | first blade is open-type (through hole formation) and second and third blades are closed-type | shape of FIG. 4 | overlap | rotation | 0.5L | 3.0 |
| | second screw kneader | first blade is open-type (through hole formation) and second and third blades are closed-type | | | | | |
| Comparative Example 3 | first screw kneader | first, second and third blades are all open-type (through hole formation) | shape of FIG. 5 | overlap | rotation | 0.5L | 3.0 |
| | second screw kneader | first, second and third blades are all open-type (through hole formation) | | | | | |
| Comparative Example 4 | first screw kneader | first, second and third blades are all closed-type | shape of FIG. 3 | overlap | rotation | 0.5L | 3.0 |
| | second | first, second and | | | | | |
| | screw kneader | third blades are all closed-type | | | | | |
| Comparative Example 5 | first screw kneader | first, second and third blades are all closed-type | shape of FIG. 3 | non-overlap | rotation | 0.1L | 1.5 |
| | second screw kneader | first, second and third blades are all closed-type | | | | | |
| Comparative Example 6 | first screw kneader | first, second and third blades are all closed-type | shape of FIG. 3 | non-overlap | rotation | 0.1L | 3.0 |
| | second screw kneader | first, second and third blades are all closed-type | | | | | |
| Comparative Example 7 | Lab. Bleander | | | | rotation | 0.1L | 3.0 |

| | | | | | | | |
|---|---|---|---|---|---|---|---|
| (Note) Overlap: The rotation direction distal ends of the blades provided on the first screw kneader and the second screw kneader maintain a separation distance of 3 mm from the other screw kneaders | | | | | | | |

### Experimental Example 1: Measurement of tensile strength of freestanding electrode

The tensile strength of the freestanding electrodes prepared in Examples 1 to 5 and Comparative Examples 1 to 7 was measured at a condition of 50 mm/min by a 180 degrees peel measurement method using UTM equipment of LLOYD company. At the time of the measurement, the maximum value of the force applied up to the point in time when the film did not break was evaluated as the strength of the free-standing film, and the measurement results are shown in Table 2 below.

**Table 2:**

| | Example 1 | Example 2 | Example 3 | Example 4 | Example 5 | Compple 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|
| Tensile Strength (MPa) | 6.47 | 6.98 | 6.41 | 6.15 | 6.34 | 5.42 | 5.73 | 5.11 | 5.29 | 4.17 | 4.56 | 3.75 |

### Experimental Example 2: Evaluation of lifetime characteristic of battery

### (1) Manufacture of lithium secondary battery

The positive electrodes prepared in Examples 1 to 5 and Comparative Examples 1 to 7 were used, lithium metal was used as a counter electrode, and an electrolyte solution containing 1M LiPF₆ in a solvent containing EC:DMC:DEC (volume ratio of 1:2:1) was used, to manufacture a coin-type half-cell.

### (2) Evaluation of capacity retention rate of lithium secondary battery

After charging and discharging the coin-type half battery prepared above 100 times at 25 °C under the voltage range of 3 to 4.3 V and the current condition of 0.33 C-rate, the retention rate of the 100^{th} discharging capacity compared to the 1^{st} discharging capacity was calculated, and the results are shown in Table 3 below

**Table 3:**

| | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|
| Capacity retention rate (100 cycle) | 96.8 | 96.1 | 95.8 | 94.7 | 95.5 | 94.3 | 93.6 | 93.2 | 92.4 | 92.1 | 91.7 | 88.9 |

Although the present invention has been described with reference to the above-mentioned preferred examples, various modifications and variations can be made. Accordingly, the appended claims will cover modifications and variations as long as they fall within the scope of the claims.

### [Description of Symbols]

10: First screw kneader
10': Second screw kneader
13, 13': Shaft
15, 15': Blade
20: Driving mechanism body
21: First rotation driving mechanism
21': Second rotation driving mechanism
23: Revolution driving mechanism
30: Mixing tank

## Claims

1. A method for preparing a dry electrode for a secondary battery, **characterized in that** the method comprises:
(i) high shear mixing a mixture comprising an active material, an electrically conductive material, and a fiberizable polymer as a binder to fiberize the binder, and
(ii) rolling the prepared mixture to produce a freestanding electrode
wherein high shear mixing is carried out by a high shear mixing device (100) comprising:
a first screw kneader (10') and a second screw kneader (10');
a first rotation driving mechanism (21) for rotating the first screw kneader (10) and a second rotation driving mechanism (21') for rotating the second screw kneader (10');
a revolution driving mechanism (23) in which the first rotation driving mechanism (21) and the second rotation driving mechanism (21') are rotatably installed;
a driving mechanism body (20) in which the revolution driving mechanism (23) is installed; and
a mixing tank (30),
wherein each of the first screw kneader (10) and the second screw kneader (10') comprises a shaft (13, 13') whose one end is connected to the rotation driving mechanism (21, 21'); and three blades (15, 15') having one end fixed to the shaft (13, 13') and having a helically curved body along the longitudinal direction of the shaft (13, 13'),
wherein each of the screw kneaders (10, 10') rotates in opposite directions with the other screw kneaders (10, 10') and blades (15, 15') overlapping each other,
wherein any one of the three blades (15, 15') provided in each of the first screw kneader (10) and the second screw kneader (10') is an open-type blade in which a through hole (18, 18') is formed in the center except for the outer periphery of the rotation direction surface, and the other two blades (15, 15') are all closed-type blades in which the rotation direction surface is closed without a through hole,
wherein the screw kneaders (10, 10') rotate by the rotation driving mechanisms (21, 21') and revolve by the revolution driving mechanism (23) at the same time, wherein the rotation direction distal ends of the blades (15, 15') provided in the first screw kneader (10) and the second screw kneader (10') rotate, while maintaining a separation distance of 1 mm to 10 mm from other screw kneaders (10, 10'),
**characterized in that** the high shear mixing comprises continuously applying a shear force of 10 to 500 N·m to the mixture,
**in that** the rotational speed of the first screw kneader (10) and the second screw kneader (10') is 10 rpm to 500 rpm,
**in that** the revolution speed is 5 rpm to 100 rpm, and
**in that** the rotational speed of the first screw kneader (10) and the second screw kneader (10') is the same.

2. The method according to claim 1, wherein the mixture does not comprise a liquid medium such as a solvent or dispersion medium.

3. The high shear mixing device (100) according to any one of claims 1 to 2,
wherein each of the through holes (18, 18') formed in the blades (15, 15') is formed to extend to the outer peripheral surface of the shaft (13, 13').

4. The method according to any one of the claims 1 to 3, wherein the rotational speed of the first screw kneader (10) and the second screw kneader (10') is 10 rpm to 300 rpm, more preferably 10 rpm to 150 rpm.

5. The method according to any one of the claims 1 to 4, wherein the revolution speed is 10 rpm to 50 rpm, preferably 10 rpm to 30 rpm.

## Patentansprüche

1. Verfahren zur Herstellung einer trockenen Elektrode für eine Sekundärbatterie, **dadurch gekennzeichnet, dass** das Verfahren umfasst:
(i) Hochschermischen einer Mischung, die ein aktives Material, ein elektrisch leitfähiges Material und ein faserbares Polymer als ein Bindemittel umfasst, um das Bindemittel zu zerfasern, und
(ii) Walzen der hergestellten Mischung, um eine freistehende Elektrode zu erzeugen,
wobei das Hochschermischen durch eine Hochschermischvorrichtung (100) durchgeführt wird, die aufweist:
einen ersten Schneckenkneter (10') und einen zweiten Schneckenkneter (10');
einen ersten Drehantriebsmechanismus (21) zum Drehen des ersten Schneckenkneters (10) und einen zweiten Drehantriebsmechanismus (21') zum Drehen des zweiten Schneckenkneters (10');
einen Umdrehungsantriebsmechanismus (23), in dem der erste Drehantriebsmechanismus (21) und der zweite Drehantriebsmechanismus (21') drehbar installiert sind;
einen Antriebsmechanismuskörper (20), in dem der Umdrehungsantriebsmechanismus (23) installiert ist; und
einen Mischtank (30),
wobei jeder von dem ersten Schneckenkneter (10) und dem zweiten Schneckenkneter (10') eine Welle (13, 13'), deren eines Ende mit dem Drehantriebsmechanismus (21, 21') verbunden ist; und drei Schaufeln (15, 15') aufweist, von denen ein Ende an der Welle (13, 13') befestigt ist und einen spiralförmig gekrümmten Körper entlang der Längsrichtung der Welle (13, 13') aufweist,
wobei jeder der Schneckenkneter (10, 10') in entgegengesetzte Richtungen dreht, wobei die anderen Schneckenkneter (10, 10') und Schaufeln (15, 15') einander überlappen,
wobei eine beliebige der drei Schaufeln (15, 15'), die in jedem von dem ersten Schneckenkneter (10) und dem zweiten Schneckenkneter (10') vorgesehen sind, eine Schaufel vom offenen Typ ist, in der ein Durchgangsloch (18, 18') in der Mitte mit Ausnahme des Außenumfangs der Drehrichtungsfläche ausgebildet ist, und die anderen zwei Schaufeln (15, 15') alle Schaufeln vom geschlossenen Typ sind, in denen die Drehrichtungsfläche ohne ein Durchgangsloch geschlossen ist,
wobei sich die Schneckenkneter (10, 10') durch die Drehantriebsmechanismen (21, 21') drehen und sich gleichzeitig durch den Umdrehungsantriebsmechanismus (23) drehen, wobei sich die in Drehrichtung entfernten Enden der Schaufeln (15, 15'), die in dem ersten Schneckenkneter (10) und dem zweiten Schneckenkneter (10') vorgesehen sind, drehen, während ein Trennungsabstand von 1 mm bis 10 mm von anderen Schneckenknetern (10, 10') beibehalten wird,
**dadurch gekennzeichnet, dass** das Hochschermischen das kontinuierliche Anwenden einer Scherkraft von 10 bis 500 N·m auf die Mischung umfasst,
dass die Drehzahl des ersten Schneckenkneters (10) und des zweiten Schneckenkneters (10') 10 U/min bis 500 U/min beträgt,
dass die Umdrehungsgeschwindigkeit 5 U/min bis 100 U/min beträgt, und
dass die Drehzahlen des ersten Schneckenkneters (10) und des zweiten Schneckenkneters (10') gleich sind.

2. Verfahren nach Anspruch 1, wobei die Mischung kein flüssiges Medium wie beispielsweise ein Lösungsmittel oder Dispersionsmedium enthält.

3. Hochschermischvorrichtung (100) nach einem der Ansprüche 1 bis 2, wobei jedes der Durchgangslöcher (18, 18'), die in den Schaufeln (15, 15') ausgebildet sind, so ausgebildet ist, dass es sich zur Außenumfangsfläche der Welle (13, 13') erstreckt.

4. Verfahren nach einem der Ansprüche 1 bis 3, wobei die Drehzahl des ersten Schneckenkneters (10) und des zweiten Schneckenkneters (10') 10 U/min bis 300 U/min, bevorzugter 10 U/min bis 150 U/min beträgt.

5. Verfahren nach einem der Ansprüche 1 bis 4, wobei die Umdrehungsgeschwindigkeit 10 U/min bis 50 U/min, bevorzugt 10 U/min bis 30 U/min beträgt.

## Revendications

1. Procédé de préparation d'une électrode sèche pour accumulateur rechargeable, **caractérisé en ce que** le procédé comprend :
(i) le mélange à cisaillement élevé d'un mélange comprenant un matériau actif, un matériau électriquement conducteur et un polymère apte au fibrage comme liant pour fibrer le liant et
(ii) le laminage du mélange préparé pour produire une électrode autoportante
où le mélange à cisaillement élevé est effectué avec un dispositif mélangeur à cisaillement élevé (100) comprenant :
un premier malaxeur à vis (10') et un deuxième malaxeur à vis (10') ;
un premier mécanisme d'entraînement en rotation (21) pour faire tourner le premier malaxeur à vis (10) et un deuxième mécanisme d'entraînement en rotation (21) pour faire tourner le deuxième malaxeur à vis (10') ;
un mécanisme d'entraînement en révolution (23) dans lequel le premier mécanisme d'entraînement en rotation (21) et le deuxième mécanisme d'entraînement en rotation (21') sont agencés de manière rotative ;
un corps mécanisme d'entraînement (20) dans lequel le mécanisme d'entraînement en révolution (23) est placé ; et
une cuve de mélange (30),
où chacun des premier malaxeur à vis (10) et deuxième malaxeur à vis (10') comprend un arbre (13, 13') dont une extrémité est connectée au mécanisme d'entraînement en rotation (21, 21') ; et trois pales (15, 15') dont une extrémité est fixée à l'arbre (13, 13') et ayant un corps à courbure hélicoïdale le long de la direction longitudinale de l'arbre (13, 13'),
où chacun des malaxeurs à vis (10, 10') tourne dans la direction opposée par rapport à l'autre malaxeur à vis (10, 10') de sorte que les pales (15, 15') se chevauchent,
où l'une quelconque des trois pales (15, 15') fournies dans chacun des premier malaxeur à vis (10) et deuxième malaxeur à vis (10') est une pale de type ouvert au centre de laquelle une ouverture traversante (18, 18') est formée, sauf au niveau de la périphérie extérieure de la surface qui est dans la direction de la rotation, et les deux autres pales (15, 15') sont toutes deux des pales de type fermé dans lesquelles la surface qui est dans la direction de la rotation est obturée et exempte d'une ouverture traversante,
où les malaxeurs à vis (10, 10') tournent sous l'effet des mécanismes d'entraînement en rotation (21, 21') et en même temps gravitent autour d'un point central sous l'effet du mécanisme d'entraînement en révolution (23), les extrémités distales des lames (15, 15') du premier malaxeur à vis (10) et du deuxième malaxeur à vis (10') tournant dans la direction de la rotation tout en maintenant une distance de séparation par rapport à l'autre malaxeur à vis (10, 10') qui va de 1 mm à 10 mm,
**caractérisé en ce que** le mélange à cisaillement élevé comprend l'application en continu au mélange d'une force de cisaillement dans la plage de 10 to 500 Nm,
**en ce que** les vitesses de rotation du premier malaxeur à vis (10) et du deuxième malaxeur à vis (10') vont de 10 tpm à 500 tpm,
**en ce que** la vitesse de révolution va de 5 tpm à 100 tpm et
**en ce que** les vitesses de rotation du premier malaxeur à vis (10) et du deuxième malaxeur à vis (10') sont identiques.

2. Procédé selon la revendication 1, où le mélange ne comprend pas un milieu liquide tel qu'un solvant ou un milieu de dispersion.

3. Dispositif mélangeur à cisaillement élevé (100) selon l'une quelconque des revendications 1 à 2, où chacune des ouvertures traversantes (18, 18') formées dans les pales (15, 15') est formée de manière à se prolonger jusqu'à la surface périphérique extérieure de l'arbre (13, 13').

4. Procédé selon l'une quelconque des revendications 1 à 3, où les vitesses de rotation du premier malaxeur à vis (10) et du deuxième malaxeur à vis (10') vont de 10 tpm à 300 tpm, préférablement de 10 tpm à 150 tpm.

5. Procédé selon l'une quelconque des revendications 1 à 4, où la vitesse de révolution va de 10 tpm à 50 tpm, préférablement de 10 tpm à 30 tpm.
